# EUROPÄISCHE PATENTSCHRIFT

(11) **EP 1 979 648 B1**
(45) Veröffentlichungstag und Bekanntmachung des Hinweises auf die Patenterteilung: **09.06.2010**
(21) Anmeldenummer: 06846947.7
(22) Anmeldetag: 27.12.2006
(51) Int. Cl.: F16F 15/131

(54) **DREHMOMENTÜBERTRAGUNGSEINRICHTUNG**
TORQUE TRANSMITTING DEVICE
DISPOSITIF DE TRANSMISSION DE COUPLE DE ROTATION

(30) Priorität: 18.01.2006 DE 102006002593
(43) Veröffentlichungstag der Anmeldung: 15.10.2008
(73) Patentinhaber: LuK Lamellen und Kupplungsbau Beteiligungs KG, 77815 Bühl (DE)
(72) Erfinder: REDER, Reinhold, 76185 Karlsruhe (DE)
(86) Internationale Anmeldenummer: PCT/DE2006/002316
(87) Internationale Veröffentlichungsnummer: WO 2007/082500

(56) Entgegenhaltungen:
- DE-A1- 4 117 579
- DE-A1- 4 402 849
- DE-A1- 19 954 372
- DE-A1- 19 957 978

## Beschreibung

Die Erfindung betrifft eine Drehmomentübertragungseinrichtung im Antriebsstrang eines Kraftfahrzeugs zur Drehmomentübertragung zwischen einer Antriebseinheit mit einer antriebsseitig vormontierten Drehschwingungsdämpfungseinrichtung und einem Getriebe mit einer getriebeseitig vormontierten Kupplungseinrichtung, insbesondere einer Doppelkupplungseinrichtung, die drehfest mit einem Ausgangsteil der Drehschwingungsdämpfungseinrichtung verbunden ist.

Aufgabe der Erfindung ist es, eine Drehmomentübertragungseinrichtung gemäß dem o.g., zum Beispiel aus der DE 199 57 978 A1 bekannten Oberbegriff des Anspruchs 1 im Hinblick auf den benötigten Bauraum zu optimieren.

Eine Lösung diesbezüglich ist aus der vorveröffentlichten DE 199 54 372 A1 bekannt, wonach die Drehschwingungsdämpfungseinrichtung am in bezug auf die Drehachse der Drehmomentübertragungseinrichtung radialen äußeren Ende angeordnet ist.

Die Aufgabe ist bei einer Drehmomentübertragungseinrichtung eines Antriebsstrangs eines Kraftfahrzeugs zur Drehmomentübertragung zwischen einer Antriebseinheit mit einer antriebsseitig vormontierten Drehschwingungsdämpfungseinrichtung und einem Getriebe mit einer getriebeseitig vormontierten Kupplungseinrichtung, insbesondere einer Doppelkupplungseinrichtung, die drehfest mit einem Ausgangsteil der Drehschwingungsdämpfungseinrichtung verbunden ist, wobei die Drehmomentübertragungseinrichtung eine solche Antriebseinheit sowie ein solches Getriebe umfasst, dadurch gelöst, dass die Drehschwingungsdämpfungseinrichtung in axialer Richtung vollständig überlappend zu und in radialer Richtung außerhalb der Kupplungseinrichtung angeordnet ist. Das liefert den Vorteil, dass für die Drehschwingungsdämpfungseinrichtung in axialer Richtung kein zusätzlicher Bauraum benötigt wird.

Ein bevorzugtes-Ausführungsbeispiel der Drehmomentübertragungseinrichtung ist **dadurch gekennzeichnet, dass** die Drehschwingungsdämpfungseinrichtung in axialer Richtung mindestens zwei Reihen Bogenfedern umfasst. Der Begriff in axialer Richtung bezieht sich im Rahmen der vorliegenden Erfindung auf die Drehachse der sich drehenden Teile der Drehmomentübertragungseinrichtung. Die Bogenfedern erstrecken sich, bezogen auf die Drehachse, in Umfangsrichtung. Durch die Anordnung von mehreren Reihen Bogenfedern in axialer Richtung wird bei geringem radialem Bauraum eine hohe Federsteifigkeit bereitgestellt.

Ein weiteres bevorzugtes Ausführungsbeispiel der Drehmomentübertragungseinrichtung ist **dadurch gekennzeichnet, dass** das Ausgangsteil der Drehschwinguhgsdämpfungseinrichtung einen radial nach innen abgewinkelten Kopplungsabschnitt mit einer radial nach innen gerichteten Verzahnung aufweist, in die eine sich in axialer Richtung erstreckende Verzahnung eines Mitnehmerelements der Kupplungseinrichtung eingreift. Das Mitnehmerelement ist, zum Beispiel mit Hilfe von Nietelementen, vorzugsweise an einer Gegendruckplatte der Kupplungseinrichtung befestigt.

Ein weiteres bevorzugtes Ausführungsbeispiel der Drehmomentübertragungseinrichtung ist **dadurch gekennzeichnet, dass** antriebsseitig in axialer Richtung zwischen einem Eingangsteil der Drehschwingungsdämpfungseinrichtung und dem Kopplungsabschnitt des Ausgangsteils eine Tellerfeder eingespannt ist. Durch die Tellerfeder wird das Ausgangsteil gegen das Eingangsteil oder gegen einen an dem Eingangsteil angebrachten Anlaufring vorgespannt.

Ein weiteres bevorzugtes Ausführungsbeispiel der Drehmomentübertragungseinrichtung ist **dadurch gekennzeichnet, dass** das Ausgangsteil zumindest teilweise radial innerhalb der und in axialer Richtung überlappend zu den Bogenfedern angeordnet ist. Das liefert den Vorteil, dass für das Ausgangsteil kein zusätzlicher axialer Bauraum benötigt wird.

Ein weiteres bevorzugtes Ausführungsbeispiel der Drehmomentübertragungseinrichtung ist **dadurch gekennzeichnet, dass** an dem Ausgangsteil radial außen Anschlagelemente für die Bogenfedern vorgesehen sind. Die Anschlagelemente können zum Beispiel durch Schweißen, Clinchen oder Nieten an dem Ausgangsteil befestigt sein.

Ein weiteres bevorzugtes Ausführungsbeispiel der Drehmomentübertragungseinrichtung ist **dadurch gekennzeichnet, dass** in den Anschlagelementen für die Bogenfedern jeweils ein zusätzliches Druckfederelement angeordnet ist, das ein freies Ende aufweist, das aus dem zugehörigen Anschlagelement herausragt und einen elastischen Anschlag für eine zugehörige Bogenfeder bildet. Durch das zusätzliche Druckfederelement kann die Isolationswirkung der Drehschwingungsdämpfungseinrichtung verbessert werden, und zwar insbesondere im Schubbetrieb, wenn die Bogenfedern bei großen Drehzahlen aufgrund hoher Reibung nur noch einen schlechten Wirkungsgrad haben.

Ein weiteres bevorzugtes Ausführungsbeispiel der Drehmomentübertragungseinrichtung ist **dadurch gekennzeichnet, dass** das Ausgangsteil antriebsseitig einen Absatz aufweist, an dem eine Tellerfeder angreift, die gegen das Eingangsteil vorgespannt ist. Durch die Tellerfeder wird sichergestellt, dass zwischen dem Ausgangsteil der Drehschwingungsdämpfungseinrichtung und der Kupplungseinrichtung kein unerwünschtes Spiel auftritt.

Ein weiteres bevorzugtes Ausführungsbeispiel der Drehmomentübertragungseinrichtung ist **dadurch gekennzeichnet, dass** das Ausgangsteil mit einer Reibsteuereinrichtung gekoppelt ist, die an einem getriebeseitigen Deckel des Eingangsteils der Drehschwingungsdämpfungseinrichtung anliegt. Die Reibsteuereinrichtung dient dazu, unerwünschte Betriebsgeräusche zu minimieren.

Ein weiteres bevorzugtes Ausführungsbeispiel der Drehmomentübertragungseinrichtung ist **dadurch gekennzeichnet, dass** die Reibsteuereinrichtung durch eine Tellerfeder gegen den getriebeseitigen Deckel Vorgespannt ist, die sich an einer Gleitschale der Drehschwingungsdämpfungseinrichtung abstützt. Die Gleitschale ist in bekannter Art und Weise zwischen den Bogenfedern und dem Eingangsteil angeordnet. Durch die erfindungsgemäße Abstützung der Tellerfeder an der Gleitschale kann ein ansonsten zur Abstützung der Tellerfeder erforderlicher Absatz an dem Eingangsteil der Drehschwingungsdämpfungseinrichtung entfallen.

Ein weiteres bevorzugtes Ausführungsbeispiel der Drehmomentübertragungseinrichtung ist **dadurch gekennzeichnet, dass** das Ausgangsteil getriebeseitig eine axiale Verzahnung aufweist, in die eine axiale Verzahnung eingreift, die an einem Kopplungsteil der Kupplungseinrichtung vorgesehen ist. Dadurch wird die Montage vereinfacht und ein Ausgleich von herstellungsbedingten Axialtoleranzen ermöglicht.

Ein weiteres bevorzugtes Ausführungsbeispiel der Drehmomentübertragungseinrichtung ist **dadurch gekennzeichnet, dass** das Ausgangsteil durch eine Klemmverschraubungseinrichtung mit einem Kopplungsteil der Kupplungseinrichtung verbunden ist. Durch die Klemmverschraubung können auf einfache Art und Weise herstellungsbedingte Axialtoleranzen ausgeglichen werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine Drehmomentübertragungseinrichtung gemäß einem ersten Ausführungs- beispiel im Halbschnitt;
- Figur 2: eine Drehmomentübertragungseinrichtung gemäß einem zweiten Ausführungs- beispiel im Halbschnitt;
- Figur 3: einen vergrößerten Ausschnitt aus Figur 2;
- Figur 4: die Darstellung eines Querschnitts durch eine der Bogenfedern der in Figur 3 dargestellten Drehmomentübertragungseinrichtung;
- Figur 5: einen vergrößerten Ausschnitt aus Figur 3;
- Figur 6: den Ausschnitt aus Figur 5 in der Draufsicht;
- Figur 7: eine Drehmomentübertragungseinrichtung gemäß einem weiteren Ausfüh- rungsbeispiel im Halbschnitt;
- Figur 8: einen vergrößerten Ausschnitt aus Figur 7;
- Figur 9: einen vergrößerten Querschnitt aus Figur 8;
- Figur 10: eine Drehmomentübertragungseinrichtung gemäß einem weiteren Ausfüh- rungsbeispiel im Halbschnitt;
- Figur 11: einen vergrößerten Ausschnitt aus Figur 10;
- Figur 12: eine Drehmomentübertragungseinrichtung gemäß einem weiteren Ausfüh- rungsbeispiel im Halbschnitt und
- Figur 13: einen vergrößerten Ausschnitt aus Figur 12.

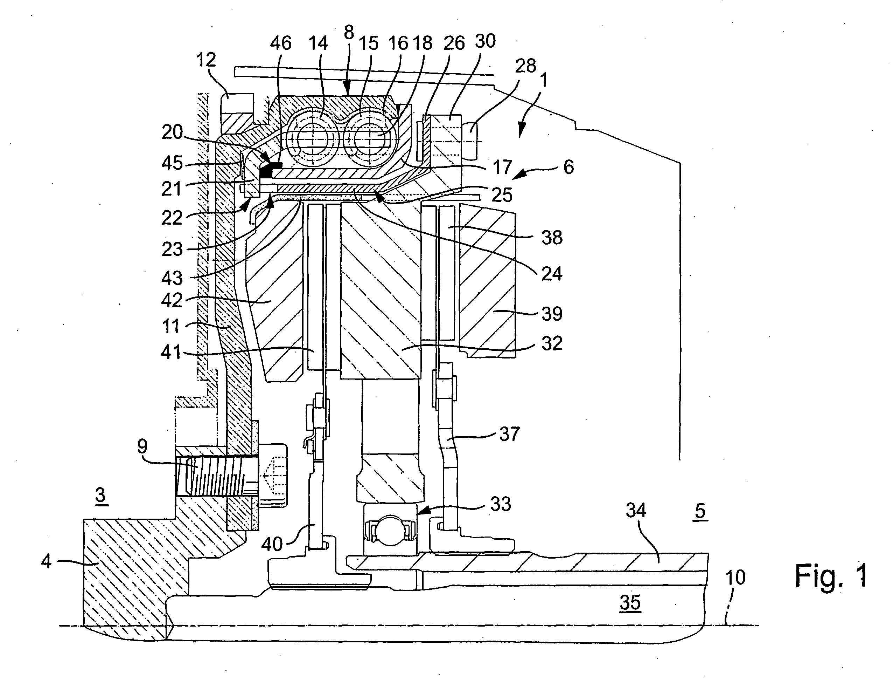

In Figur 1 ist ein Teil eines Antriebsstrangs 1 eines Kraftfahrzeugs dargestellt. Zwischen einer Antriebseinheit 3, insbesondere einer Brennkraftmaschine eines Kraftfahrzeugs, von der eine Kurbelwelle 4 ausgeht, und einem Getriebe 5 ist eine Doppelkupplung 6 angeordnet. Zwischen die Antriebseinheit 3 und die Doppelkupplung 6 ist eine Schwingungsdämpfungseinrichtung 8 geschaltet. Bei der Schwingungsdämpfungseinrichtung 8 handelt es sich um ein Zweimassenschwungrad.

Die Drehschwingungsdämpfungseinrichtung 8 umfasst ein Eingangsteil 11, das auch als Primärschwungmasse oder kurz Primärmasse bezeichnet wird. Die Primärschwungmasse 11 ist mit Hilfe von Schraubverbindungen 9 an der Kurbelwelle 4 vormontiert. Die Primärschwungmasse oder das Eingangsteil 11 der Drehschwingungsdämpfungseinrichtung 8 hat im Wesentlichen die Gestalt einer sich in radialer Richtung erstreckenden Kreisringscheibe, die radial außen einen in axialer Richtung zum Getriebe hin umgebogenen Randbereich aufweist, der einen Schwingungsdämpferkäfig bildet. An dem Eingangsteil 11 ist radial außen ein Anlasserzahnkranz 12 befestigt.

In dem Schwingungsdämpferkäfig des Eingangsteils 11 sind zwei Bogenfedern 14, 15 aufgenommen. Die beiden Bogenfedern 14, 15 erstrecken, bezogen auf eine Drehachse 10 der Kurbelwelle 4, in Umfangsrichtung und sind in axialer Richtung voneinander beabstandet. Zwischen den beiden Bogenfedern 14, 15 und dem Eingangsteil 11 ist eine Gleitschale 16 angeordnet, die eine deutlich höhere Härte wie das Eingangsteil 11 aufweist und dazu dient, einen unerwünschten Verschleiß des Eingangsteils 11 durch die Bogenfedern 14, 15 zu verhindern. Der Schwingungsdämpferkäfig, in dem die Bogenfedern 14, 15 aufgenommen sind, wird durch einen Deckel 17 vervollständigt, der einen winkelförmigen Querschnitt aufweist.

Die Bogenfedern 14, 15 sind mit einem Anschlagfinger 18 eines Ausgangsteils 20 der Drehschwingungsdämpfungseinrichtung 8 gekoppelt. Das Ausgangsteil 20 weist einen sich in radialer Richtung erstreckenden Kopplungsabschnitt 21 mit einer radialen Verzahnung 22 auf. Der Anschlagfinger 18 greift in die Bogenfedern 14 und 15 ein, ist einstückig mit dem Kopplungsabschnitt 21 verbunden und erstreckt sich in axialer Richtung. Die radiale Verzahnung 22 des Kopplungsabschnitts 21 befindet sich mit einer axialen Verzahnung 23 in Eingriff, die an einem antriebsseitigen Ende eines axialen Abschnitts 24 eines Mitnehmerelements 25 ausgebildet ist. Das Mitnehmerelement 25 weist einen in radialer Richtung abgewinkelten Befestigungsabschnitt 26 auf, der mit Hilfe von Nietelementen 28 an einem Arm 30 der Doppelkupplung 6 befestigt ist. Der Arm 30 geht von einer zentralen Gegendruckplatte 32 der Doppelkupplung 6 aus.

Die zentrale Gegendruckplatte 32 wird auch als Zwischendruckplatte bezeichnet und ist mit Hilfe einer Lagereinrichtung 33 drehbar auf einer Getriebehohlwelle 34 gelagert. In der Getriebehohlwelle 34 ist eine Getriebevollwelle 35 drehbar angeordnet. Eine Kupplungsscheibe 37 ist drehfest mit der Getriebehohlwelle 34 verbunden. Die Kupplungsscheibe 37 ist mit Reibbelägen 38 ausgestattet, die in bekannter Art und Weise zwischen der Zwischendruckplatte 32 und einer Druckplatte 39 einklemmbar sind. Eine weitere Kupplungsscheibe 40 ist drehfest mit der Getriebevollwelle 35 verbunden. Die weitere Kupplungsscheibe 40 ist mit Reibbelägen 41 ausgestattet, die zwischen der Zwischendruckplatte 32 und einer weiteren Druckplatte 42 einklemmbar ist. Die Druckplatte 39 ist mit Hilfe einer (nicht dargestellten) Betätigungseinrichtung in axialer Richtung verlagerbar. Die Druckplatte 42 ist mit Hilfe eines Zugankers 43 mit Hilfe einer weiteren Betätigungseinrichtung ebenfalls in axialer Richtung verlagerbar.

Antriebsseitig ist zwischen dem Eingangsteil 11 und dem Kopplungsabschnitt 21 des Ausgangsteils 20 eine Tellerfeder 45 eingespannt. Durch die Tellerfeder 45 wird der Kopplungsabschnitt 21 des Ausgangsteils 20 getriebeseitig an einem Anlaufring 46 in Anlage gehalten, der an dem antriebsseitigen Ende des Deckels 17 des Eingangsteils 11 angebracht ist. Durch die Tellerfeder 45 und den Anlaufring 46 wird das Ausgangsteil 20 in axialer Richtung gelagert. Die radiale Lagerung des Ausgangsteils 20 erfolgt durch die in Eingriff befindlichen Verzahnungen 22 und 23. Durch die Verzahnungen wird das Ausgangsteil 20 drehfest mit dem Mitnehmerelement 25 verbunden, das an dem Arm 30 befestigt ist, der von der zentralen Gegendruckplatte 32 ausgeht.

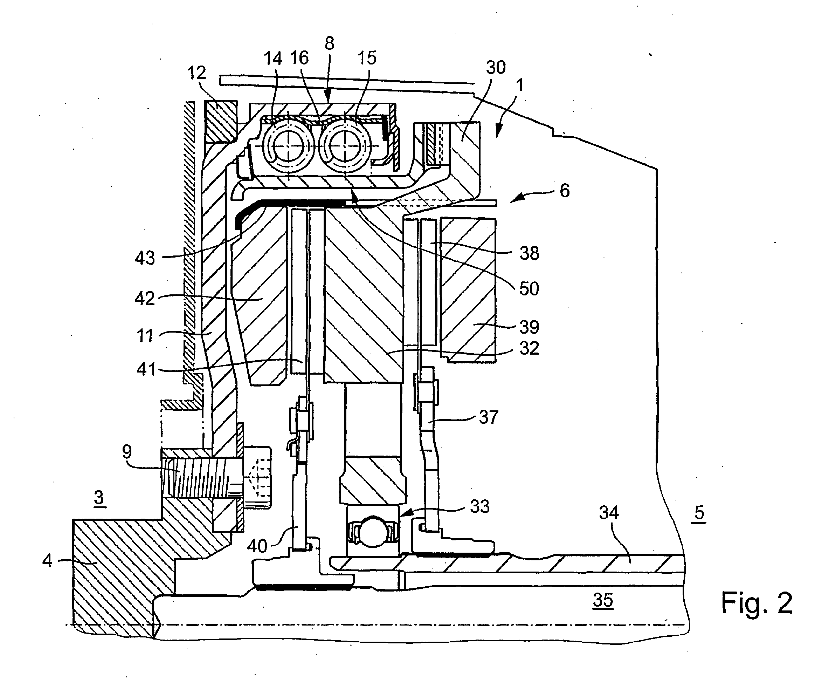

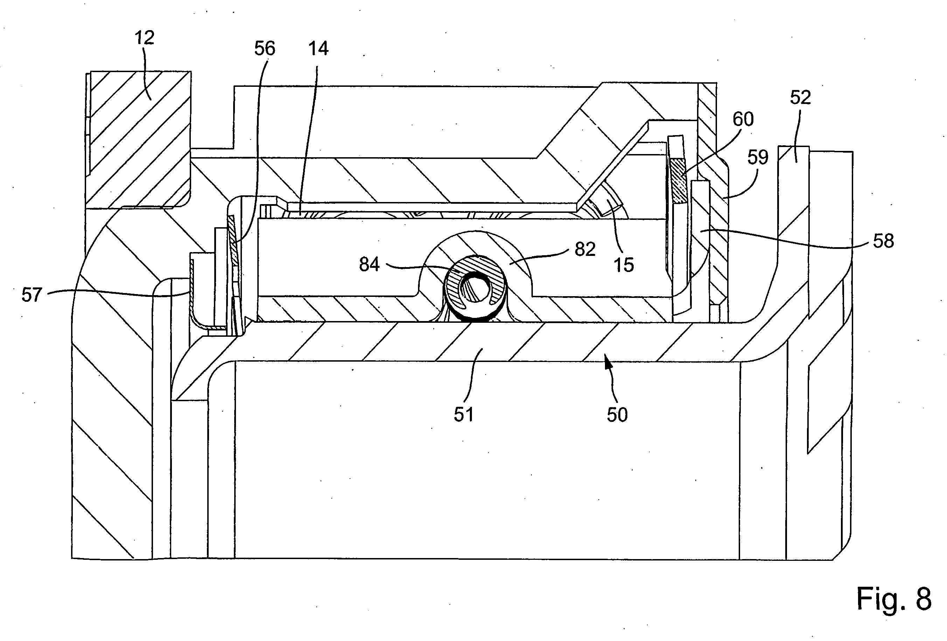

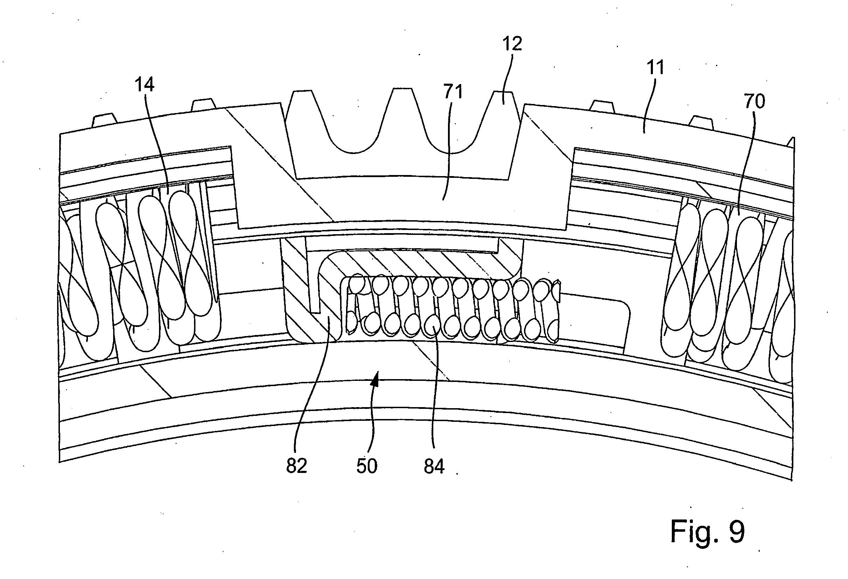

In den Figuren 2 bis 13 sind weitere Ausführungsbeispiele der erfindungsgemäßen Drehmomentübertragungseinrichtung in verschiedenen Ansichten dargestellt. Zur Bezeichnung gleicher Teile werden die gleichen Bezugszeichen verwendet. Um Wiederholungen zu vermeiden, wird auf die vorangegangene Beschreibung der Figur 1 verwiesen. Im Folgenden wird hauptsächlich auf die Unterschiede zwischen den einzelnen Ausführungsbeispielen eingegangen.

Bei dem in den Figuren 2 bis 6 dargestellten Ausführungsbeispiel umfasst die Drehmomentübertragungseinrichtung 8 ein Ausgangsteil 50 mit einem axialen Abschnitt 51. Am getriebeseitigen Ende des Ausgangsteils 50 ist ein radialer Abschnitt 52 von dem axialen Abschnitt 51 abgewinkelt. An dem antriebsseitigen Ende des Ausgangsteils 50 ist ein Randbereich 54 radial nach innen umgebogen. Zwischen dem umgebogenen Rand 54 und dem axialen Abschnitt 51 weist das Ausgangsteil 50 einen Absatz 55 auf. An dem Absatz 55 stützt sich eine Tellerfeder 56 in axialer Richtung ab. Radial außen stützt sich die Tellerfeder 56 in axialer Richtung an dem Eingangsteil 11 der Drehschwingungsdämpfungseinrichtung 8 ab. Antriebsseitig ist der Aufnahmeraum für die Bogenfedern 14, 15, der vorzugsweise mit Schmiermittel gefüllt ist, durch ein Dichtblech 57 abgedichtet, das einen winkelförmigen Querschnitt aufweist und sich zwischen dem Eingangsteil 11 und dem Ausgangsteil 50 erstreckt.

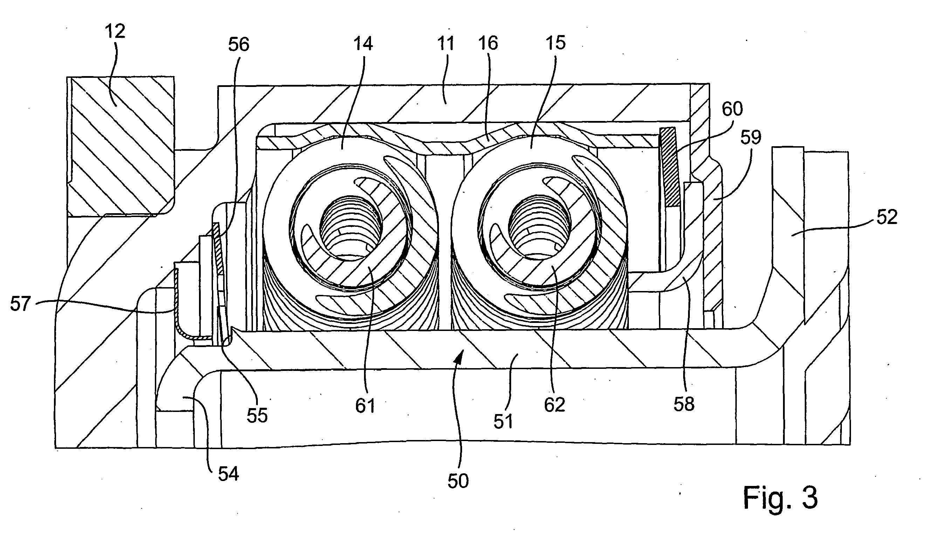

Der Aufnahmeraum für die Bogenfedern 14, 15 ist getriebeseitig durch einen Deckel 59 abgeschlossen, der an dem Eingangsteil 11 befestigt ist. Antriebsseitig befindet sich an dem Deckel 59 eine Reibsteuereinrichtung 58 in Anlage, die mit dem Ausgangsteil 50 gekoppelt ist. Die Reibsteuereinrichtung 58 wird durch eine Tellerfeder 60 an dem Deckel 59 in Anlage gehalten. Zu diesem Zweck stützt sich die Tellerfeder 60 radial innen an der Reibsteuereinrichtung 58 und radial außen an der Gleitschale 16 ab. Dadurch wird eine besonders Platz sparende Auslegung ermöglicht. Alternativ kann die Tellerfeder 60 auch an einem entsprechend geformten Absatz an dem Eingangsteil 11 abgestützt werden. In Figur 3 sieht man, dass in den Bogenfedern 14, 15 weitere Bogenfedern 61, 62 angeordnet sein können.

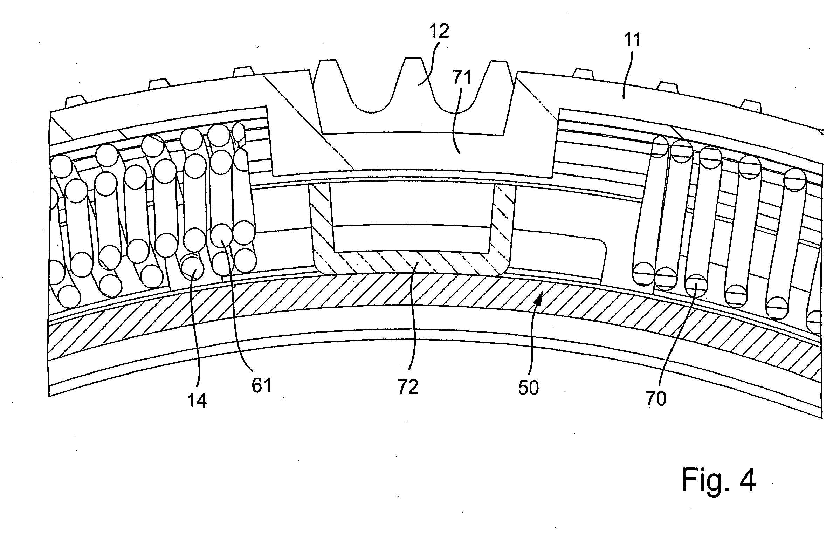

In Figur 4 sieht man, dass auch in Umfangsrichtung weitere Bogenfedern 70 vorgesehen sind. Die Bogenfedern 14, 61 und 70 sind durch Anschlagelemente 71, die in das Eingangsteil 11 eingeprägt sind, mit diesem gekoppelt. Die Anschlagelemente 71 erstrecken sich von dem Eingangsteil 11 radial nach innen. Analog erstrecken sich von dem Ausgangsteil 50 weitere Anschlagelemente 72 radial nach außen. Die Anschlagelemente 72 dienen dazu, das Ausgangsteil 50 mit den Bogenfedern 14, 61 und 70 zu koppeln. Die Verbindung zwischen den Anschlagelementen 72, von denen in Figur 1 nur ein Anschlagelement zu sehen ist, und dem Ausgangsteil 50 wird zum Beispiel durch Schweißen, Nieten oder Clinchen sichergestellt. Die Anschlagelemente 71, von denen in Figur 4 nur eines dargestellt ist, können auch als aufgesetzte Anschlagelemente ausgeführt werden. Die Breite der Anschlagelemente, die auch als Anschlagstücke bezeichnet werden, kann für die beiden Bogenfederkanäle, in denen die Bogenfedern aufgenommen sind, unterschiedlich ausgeführt sein. Die Bestückung der Bogenfederkanäle mit Bogenfedern muss nicht gleich sein.

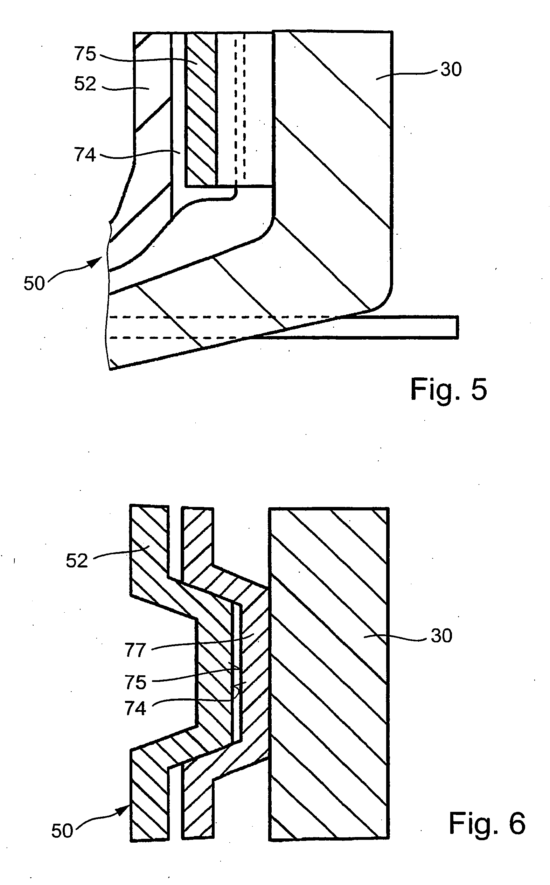

In dem vergrößerten Ausschnitt, der in Figur 5 dargestellt ist, sieht man, dass der radiale Abschnitt 52 des Ausgangsteils 50 mit einer axialen Verzahnung 74 ausgestattet ist. Der Arm 30, der von der zentralen Gegendruckplatte der Doppelkupplung ausgeht, ist analog mit einer komplementär ausgebildeten axialen Verzahnung 75 ausgestattet. Durch die sich miteinander in Eingriff befindlichen Verzahnungen 74 und 75 wird das Ausgangsteil 50 mit dem Arm 30 gekoppelt.

In Figur 6 sieht man, dass ein Kopplungsteil 77 an dem Arm 30 befestigt ist, das die Verzahnung 75 aufweist. Die Anpressung der Axialverzahnung 75 an die komplementär ausgebildete Axialverzahnung 75 erfolgt durch die in Figur 3 mit 56 bezeichnete Tellerfeder, die zwischen dem Eingangsteil 11 und dem Ausgangsteil 50 in axialer Richtung eingespannt ist. Dadurch wird sichergestellt, dass zwischen der Drehschwingungsdämpfungseinrichtung 8 und der Doppelkupplung 6 kein Spiel auftritt, das Geräusche verursachen kann oder Verschleiß erzeugt. Zu diesem Zweck ist die Tellerfeder (56 in Figur 3) so ausgelegt, dass sie eine Toleranzbreite von +/- 1,5 mm sowie dynamische Bewegungen des Eingangsteils 11 ausgleichen kann. Das gilt auch für die Anschlagelemente oder Anschlagstücke an dem Ausgangsteil 50, die in allen Positionen ausreichend Kontakt für die zugehörigen Bogenfederenden bilden müssen. Die axiale Position des Ausgangsteils 50, das auch als Flansch bezeichnet wird, ist variabel.

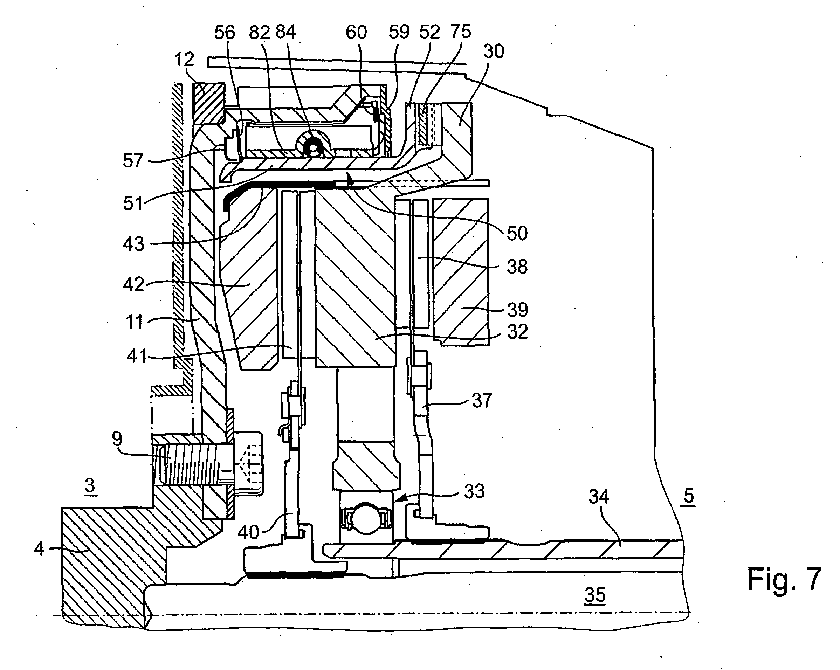

Bei dem in den Figuren 7 bis 9 dargestellten Ausführungsbeispiel ist an dem Ausgangsteil 50 ein Anschlagelement 82 befestigt, das einen im Wesentlichen kreiszylinderförmigen Aufnahmeraum für eine Schraubendruckfeder 84 aufweist. Die Schraubendruckfeder 84 ragt mit ihrem der Bogenfeder 70 zugewandten Ende aus dem Anschlagelement 82 heraus. Durch die in das Anschlagelement 82 eingebaute Druckfeder 84 kann die Isolationswirkung der Drehschwingungsdämpfungseinrichtung 8 deutlich verbessert werden. Wenn bei hohen Drehzahlen im Schubbetrieb die Bogenfedern durch die mit der Drehzahl verbundene hohe Reibung einen schlechten Wirkungsgrad zeigen, dann liefert die Schraubendruckfeder 84, wenn die Bogenfeder 70 an ihr zur Anlage kommt, zusätzlich Elastizität.

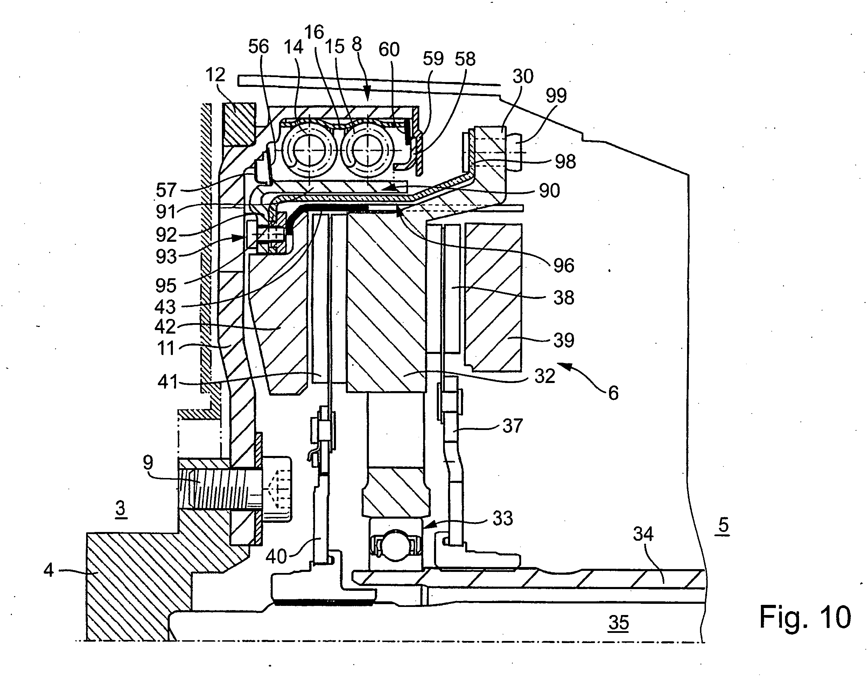

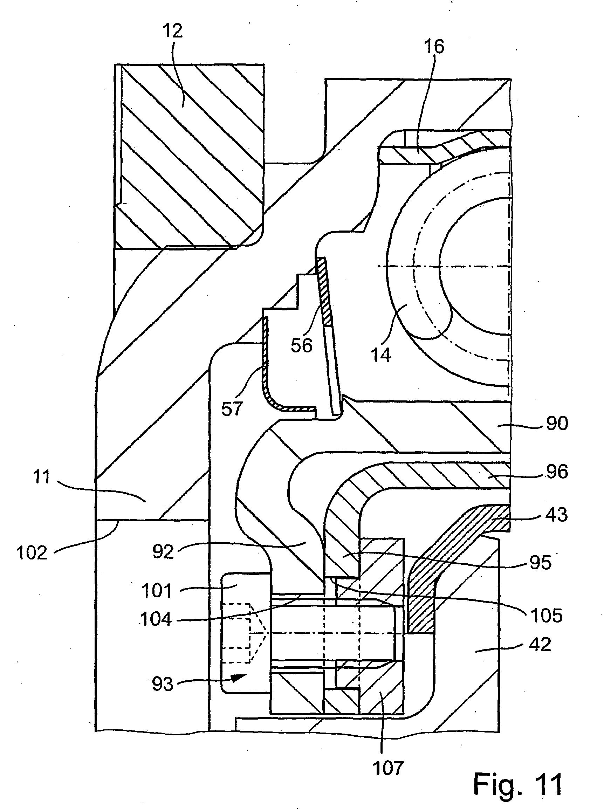

Bei dem in den Figuren 10 und 11 dargestellten Ausführungsbeispiel sind die Bogenfedern 14, 15 mit einem Ausgangsteil 90 gekoppelt. Das Ausgangsteil 90 der Drehschwingungsdämpfungseinrichtung 8 weist einen axialen Abschnitt 91 auf, von dessen antriebsseitigem Ende ein Randbereich 92 radial nach innen abgewinkelt ist. An dem umgebogenen Randbereich 92 ist mit Hilfe von Schraubverbindungen 93, von denen in Figur 10 nur eine dargestellt ist, ein sich in radialer Richtung erstreckender Mitnehmerabschnitt 95 eines Mitnehmerteils 96 befestigt. An seinem getriebeseitigen Ende geht der axiale Abschnitt 91 in einen radial nach außen umgebogenen Randbereich 98 über, der mit Hilfe von Nietelementen 99, von denen in Figur 10 nur eine dargestellt ist, an dem Arm 30 befestigt ist, der von der zentralen Gegendruckplatte 32 ausgeht.

In der vergrößerten Darstellung der Figur 11 sieht man, dass die Schraubverbindung 93 eine Schraube 101 umfasst, die zu Montagezwecken durch eine Montageöffnung 102 in dem Eingangsteil 11 der Drehschwingungsdämpfungseinrichtung 8 zugänglich ist. Die Schraube 101 weist einen Schraubenschaft auf, der sich durch ein Durchgangsloch 104, das in dem radial nach innen umgebogenen Randbereich 92 des Ausgangsteils 90 ausgespart ist, und durch ein weiteres Durchgangsloch 105 erstreckt, das in dem Mitnehmerabschnitt 95 des Mitnehmerteils 96 ausgespart ist. Auf das freie Ende des Schafts der Schraube 101 ist eine Mutter 107 aufgeschraubt. Durch die Schraube 101 und die Mutter 107 wird das Mitnehmerteil 96 fest mit dem Ausgangsteil 90 verbunden.

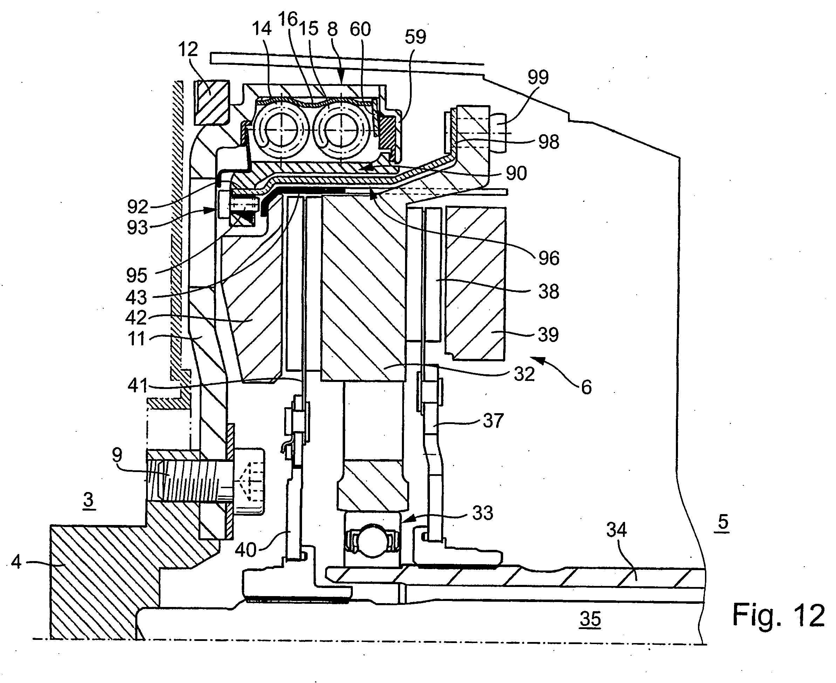

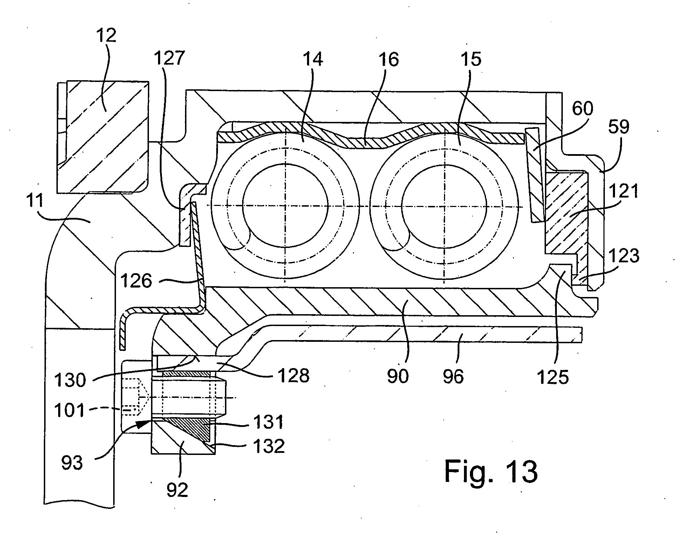

In den Figuren 12 und 13 ist ein weiteres Ausführungsbeispiel in verschiedenen Ansichten dargestellt. Zwischen der Tellerfeder 60 und dem Deckel 50 des Eingangsteils 11 der Drehschwingungsdämpfungseinrichtung 8 ist eine Reibsteuereinrichtung 121 eingespannt. Die Reibsteuereinrichtung 121 weist radial innen eine Dichtnase 123 auf, an der ein Vorsprung 125, der sich von dem Ausgangsteil 90 radial nach außen erstreckt, anliegt. Das Ausgangsteil 90 ist in axialer Richtung durch eine kombinierte Feder- und Dichteinrichtung 126 gegen die Dichtnase 123 vorgespannt. Die kombinierte Feder- und Dichteinrichtung 126 stützt sich radial außen unter Zwischenschaltung eines gehärteten Verschleißschutzblechs 127 an dem Eingangsteil 11 ab.

An seinem antriebsseitigen Ende weist das Mitnehmerelement 96 axiale Finger 128 auf, von denen in Figur 13 nur einer sichtbar ist. Der axiale Finger 128 ist in einer Klemmaufnahme 130 aufgenommen, die in dem radial nach innen umgebogenen Randbereich 92 des Ausgangsteils 90 durch eine Klemmelement 131 begrenzt ist. Das Klemmelement 131 wirkt mit einer Rampe 132 zusammen, die an dem umgebogenen Randbereich 92 des Ausgangsteils 90 ausgebildet ist. Das Klemmelement 131 weist ein Durchgangsloch mit einem Innengewinde auf, in welches das Außengewinde der Schraube 101 eingeschraubt ist. Beim Anziehen der Schraube 101 wird der axiale Finger 128 in der Klemmaufnahme 130 eingeklemmt. Diese Art der Verbindung wird im Rahmen der vorliegenden Erfindung auch als Klemmverschraubung bezeichnet. Durch die Klemmverschraubung können Axialtoleranzen ausgeglichen werden.

Bei dem in den Figuren 12 und 13 dargestellten Ausführungsbeispiel werden dynamische Axialbewegungen des Eingangsteils 11 direkt von der Tellerfeder 60 aufgenommen. Das Ausgangsteil 90 wird, wie vorab beschrieben ist, an der Dichtnase 123 in Anlage gehalten. Im Betrieb der Drehmomentübertragungseinrichtung wird die vorzugsweise aus Kunststoff gebildete Dichtnase nach wenigen Drehbewegungen abgerieben. Dann wird das Eingangsteil 11, das auch als Primärschwungscheibe bezeichnet wird, nicht mehr in seinen dynamischen Axialbewegungen behindert. Alternativ zu der Dichtnase 123 ist auch eine abdichtende Tellerfeder verwendbar.

### Bezugszeichenliste

- 1.: Antriebsstrang
- 3.: Antriebseinheit
- 4.: Kurbelwelle
- 5.: Getriebe
- 6.: Doppelkupplung
- 8.: Schwingungsdämpfungseinrichtung
- 9.: Schraubverbindung
- 10.: Drehachse
- 11.: Eingangsteil
- 12.: Anlasserzahnkranz
- 14.: Bogenfeder
- 15.: Bogenfeder
- 16.: Gleitschale
- 17.: Deckel
- 18.: Anschlagfinger
- 20.: Ausgangsteil
- 21.: Kopplungsabschnitt
- 22.: Verzahnung
- 23.: Verzahnung
- 24.: Abschnitt
- 25.: Mitnehmerelement
- 26.: Befestigungsabschnitt
- 28.: Nietelemente
- 30.: Arm
- 32.: Gegendruckplatte
- 33.: Lagereinrichtung
- 34.: Getriebehohlwelle
- 35.: Getriebevollwelle
- 37.: Kupplungsscheibe
- 38: Reibbeläge
- 39.: Druckplatte
- 40.: Kupplungsscheibe
- 41.: Reibbeläge
- 42.: Druckplatte
- 43.: Zuganker
- 45.: Tellerfeder
- 46.: Anlaufring
- 50.: Ausgangsteil
- 51.: Abschnitt
- 52.: Abschnitt
- 54.: Randbereich
- 55.: Absatz
- 56.: Tellerfeder
- 57.: Dichtblech
- 58.: Reibsteuereinrichtung
- 59.: Deckel
- 60.: Tellerfeder
- 61.: Bogenfeder
- 62.: Bogenfeder
- 70.: Bogenfeder
- 71.: Anschlagelement
- 72.: Anschlagelement
- 74.: Verzahnung
- 75.: Verzahnung
- 77.: Kopplungsteil
- 82.: Anschlagelement
- 84.: Druckfeder
- 90.: Ausgangsteil
- 91.: Abschnitt
- 92.: Randbereich
- 93.: Schraubverbindung

- 95.: Mitnehmerabschnitt
- 96.: Mitnehmerteil
- 98.: Randbereich
- 99.: Nietelemente
- 101.: Schraube
- 102.: Montageöffnung
- 104.: Durchgangsloch
- 105.: Durchgangsloch
- 107.: Mutter
- 121.: Reibsteuereinrichtung
- 123.: Dichtnase
- 125.: Vorsprung
- 126.: Federeinrichtung
- 127.: Verschleißschutzblech
- 128.: Finger
- 130.: Klemmaufnahme
- 131.: Klemmelement
- 132.: Rampe

## Patentansprüche

1. Drehmomentübertragungseinrichtung eines Antriebsstrangs eines Kraftfahrzeugs zur Drehmomentübertragung zwischen einer Antriebseinheit (3) mit einer antriebsseitig vormontierten Drehschwingungsdämpfungseinrichtung (8) und einem Getriebe (5) mit einer getriebeseitig vormontierten Kupplungseinrichtung (6), insbesondere einer Doppelkupplungseinrichtung, die drehfest mit einem Ausgangsteil (20;50;90) der Drehschwingungsdämpfungseinrichtung (8) verbunden ist, wobei die Drehmomentübertragungseinrichtung eine solche Antriebseinheit sowie ein solches Getriebe umfasst, **dadurch gekennzeichnet, dass** die Drehschwingungsdämpfungseinrichtung (8) in axialer Richtung vollständig überlappend zu und in radialer Richtung außerhalb der Kupplungseinrichtung (6) angeordnet ist.

2. Drehmomentübertragungseinrichtung nach Anspruch 1, **dadurch gekennzeichnet, dass** die Drehschwingungsdämpfungseinrichtung (8) in axialer Richtung mindestens zwei Reihen Bogenfedern (14,15) umfasst.

3. Drehmomentübertragungseinrichtung nach Anspruch 1 oder 2, **dadurch gekennzeichnet, dass** das Ausgangsteil (20) der Drehschwingungsdämpfungseinrichtung (8) einen radial nach innen abgewinkelten Kopplungsabschnitt (21) mit einer radial nach innen gerichteten Verzahnung (22) aufweist, in die eine sich in axialer Richtung erstreckende Verzahnung (23) eines Mitnehmerelements (25) der Kupplungseinrichtung (6) eingreift.

4. Drehmomentübertragungseinrichtung nach Anspruch 3, **dadurch gekennzeichnet, dass** antriebsseitig in axialer Richtung zwischen einem Eingangsteil (11) der Drehschwingungsdämpfungseinrichtung (8) und dem Kopplungsabschnitt (21) des Ausgangsteils (20) eine Tellerfeder (45) eingespannt ist.

5. Drehmomentübertragungseinrichtung nach Anspruch 2, **dadurch gekennzeichnet, dass** das Ausgangsteil (50;90), zumindest teilweise, radial innerhalb der und in axialer Richtung überlappend zu den Bogenfedern (14,15) angeordnet ist.

6. Drehmomentübertragungseinrichtung nach Anspruch 5, **dadurch gekennzeichnet, dass** an dem Ausgangsteil (50) radial außen Anschlagelemente (72;82) für die Bogenfedern (14,70) vorgesehen sind.

7. Drehmomentübertragungseinrichtung nach Anspruch 6, **dadurch gekennzeichnet, dass** in den Anschlagelementen (82) für die Bogenfedern (14,70) jeweils ein zusätzliches Druckfederelement (84) angeordnet ist, das ein freies Ende aufweist, das aus dem zugehörigen Anschlagelement (82) herausragt und einen elastischen Anschlag für eine zugehörige Bogenfeder (70) bildet.

8. Drehmomentübertragungseinrichtung nach Anspruch 6 oder 7, **dadurch gekennzeichnet, dass** das Ausgangsteil (50) antriebsseitig einen Absatz (55) aufweist, an dem eine Tellerfeder (56) angreift, die gegen das Eingangsteil (11) vorgespannt ist.

9. Drehmomentübertragungseinrichtung nach einem der Ansprüche 5 bis 8, **dadurch gekennzeichnet, dass** das Ausgangsteil (50) mit einer Reibsteuereinrichtung (58) gekoppelt ist, die an einem getriebeseitigen Deckel (59) des Eingangsteils (11) der Drehschwingungsdämpfungseinrichtung (8) anliegt.

10. Drehmomentübertragungseinrichtung nach Anspruch 9, **dadurch gekennzeichnet, dass** die Reibsteuereinrichtung (58) durch eine Tellerfeder (60) gegen den getriebeseitigen Deckel (59) vorgespannt ist, die sich an einer Gleitschale (16) der Drehschwingungsdämpfungseinrichtung (8) abstützt.

11. Drehmomentübertragungseinrichtung nach einem der Ansprüche 5 bis 10, **dadurch gekennzeichnet, dass** das Ausgangsteil (50) getriebeseitig eine axiale Verzahnung (74) aufweist, in die eine axiale Verzahnung (75) eingreift, die an einem Kopplungsteil (77) der Kupplungseinrichtung (6) vorgesehen ist.

12. Drehmomentübertragungseinrichtung nach einem der Ansprüche 5 bis 10, **dadurch gekennzeichnet, dass** das Ausgangsteil (90) durch eine Klemmverschraubungseinrichtung (92,93,131,132) mit einem Kopplungsteil (96) der Kupplungseinrichtung (6) verbunden ist.

## Claims

1. Torque transmitting device of a drivetrain of a motor vehicle for transmitting torque between a drive unit (3), with a rotary vibration damping device (8) pre-assembled on the drive side, and a gearbox (5), with a clutch device (6), in particular a dual-clutch device, which is rotationally fixedly connected to an output part (20; 50; 90) of the rotary vibration damping device (8), pre-assembled on the gearbox side, with the torque transmitting device comprising a drive unit of said type and a gearbox of said type, **characterized in that** the rotary vibration damping device (8) is arranged so as to fully overlap the clutch device (6) in the axial direction and is arranged outside the clutch device (6) in the radial direction.

2. Torque transmitting device according to Claim 1, **characterized in that** the rotary vibration damping device (8) comprises at least two rows of bow springs (14, 15) in the axial direction.

3. Torque transmitting device according to Claim 1 or 2, **characterized in that** the output part (20) of the rotary vibration damping device (8) has a radially inwardly angled coupling section (21) with a radially inwardly aligned toothing (22), into which engages a toothing (23), which extends in the axial direction, of a driver element (25) of the clutch device (6).

4. Torque transmitting device according to Claim 3, **characterized in that**, at the drive side, a plate spring (45) is braced in the axial direction between an input part (11) of the rotary vibration damping device (8) and the coupling section (21) of the output part (20).

5. Torque transmitting device according to Claim 2, **characterized in that** the output part (50; 90) is at least partially arranged radially within and so as to axially overlap the bow springs (14, 15).

6. Torque transmitting device according to Claim 5, **characterized in that** stop elements (72; 82) for the bow springs (14, 70) are provided radially at the outside on the output part (50).

7. Torque transmitting device according to Claim 6, **characterized in that** in each case one additional compression spring element (84) is arranged in the stop elements (82) for the bow springs (14, 70), which compression spring element (84) has a free end which projects out of the associated stop element (82) and forms an elastic stop for an associated bow spring (70).

8. Torque transmitting device according to Claim 6 or 7, **characterized in that** the output part (50) has, at the drive side, a shoulder (55) on which a plate spring (56) engages, which plate spring (56) is preloaded against the input part (11).

9. Torque transmitting device according to one of Claims 5 to 8, **characterized in that** the output part (50) is coupled to a friction control device (58) which bears against a gearbox-side cover (59) of the input part (11) of the rotary vibration damping device (8).

10. Torque transmitting device according to Claim 9, **characterized in that** the friction control device (58) is preloaded by a plate spring (60) against the gearbox-side cover (59), which plate spring (60) is supported against a sliding shell (16) of the rotary vibration damping device (8).

11. Torque transmitting device according to one of Claims 5 to 10, **characterized in that** the output part (50) has, at the gearbox side, an axial toothing (74) into which engages an axial toothing (75) which is provided on a coupling part (77) of the clutch device (6).

12. Torque transmitting device according to one of Claims 5 to 10, **characterized in that** the output part (90) is connected by means of a clamping screw device (92, 93, 131, 132) to a coupling part (96) of the clutch device (6).

## Revendications

1. Dispositif de transfert de couple d'une chaîne cinématique d'un véhicule automobile pour le transfert de couple entre une unité d'entraînement (3) comprenant un dispositif d'amortissement des oscillations de torsion (8) prémonté du côté de l'entraînement et une boîte de vitesses (5) comprenant un dispositif d'embrayage (6) prémonté du côté de la boîte de vitesses, notamment un dispositif à double embrayage, qui est connecté de manière solidaire en rotation à une partie de sortie (20 ; 50 ; 90) du dispositif d'amortissement des oscillations de torsion (8), le dispositif de transfert de couple comprenant une telle unité d'entraînement et une telle boîte de vitesses, **caractérisé en ce que** le dispositif d'amortissement des oscillations de torsion (8) est disposé dans la direction radiale en dehors du dispositif d'embrayage (6) et en le recouvrant complètement dans la direction axiale.

2. Dispositif de transfert de couple selon la revendication 1, **caractérisé en ce que** le dispositif d'amortissement des oscillations de torsion (8) comprend au moins deux rangées de ressorts à lame (14, 15) dans la direction axiale.

3. Dispositif de transfert de couple selon la revendication 1 ou 2, **caractérisé en ce que** la partie de sortie (20) du dispositif d'amortissement des oscillations de torsion (8) présente une portion d'accouplement (21) coudée radialement vers l'intérieur avec une denture (22) orientée radialement vers l'intérieur, dans laquelle vient en prise une denture (23) s'étendant dans la direction axiale, d'un élément d'entraînement (25) du dispositif d'embrayage (6).

4. Dispositif de transfert de couple selon la revendication 3, **caractérisé en ce qu'**un ressort Belleville (45) est serré du côté de l'entraînement dans la direction axiale entre une partie d'entrée (11) du dispositif d'amortissement des oscillations de torsion (8) et la portion d'accouplement (21) de la partie de sortie (20).

5. Dispositif de transfert de couple selon la revendication 2, **caractérisé en ce que** la partie de sortie (50 ; 90) est disposée au moins en partie radialement à l'intérieur des ressorts à lame (14, 15) et en les chevauchant dans la direction axiale.

6. Dispositif de transfert de couple selon la revendication 5, **caractérisé en ce que** l'on prévoit sur la partie de sortie (50), radialement à l'extérieur, des éléments de butée (72; 82) pour les ressorts à lame (14, 70).

7. Dispositif de transfert de couple selon la revendication 6, **caractérisé en ce que** dans les éléments de butée (82) pour les ressorts à lame (14, 70) est disposé à chaque fois un élément de ressort de compression (84) supplémentaire, qui présente une extrémité libre qui sort de l'élément de butée associé (82) et qui forme une butée élastique pour un ressort à lame associé (70).

8. Dispositif de transfert de couple selon la revendication 6 ou 7, **caractérisé en ce que** la partie de sortie (50) présente, du côté de l'entraînement, un épaulement (55) contre lequel vient en prise un ressort Belleville (56) qui est précontraint contre la partie d'entrée (11).

9. Dispositif de transfert de couple selon l'une quelconque des revendications 5 à 8, **caractérisé en ce que** la partie de sortie (50) est accouplée à un dispositif de commande à friction (58), qui s'applique contre un couvercle (59), du côté de la boîte de vitesses, de la partie d'entrée (11) du dispositif d'amortissement des oscillations de torsion (8).

10. Dispositif de transfert de couple selon la revendication 9, **caractérisé en ce que** le dispositif de commande à friction (58) est précontraint par un ressort Belleville (60) contre le couvercle (59) du côté de la boîte de vitesses, qui s'appuie contre une coque de glissement (16) du dispositif d'amortissement des oscillations de torsion (8).

11. Dispositif de transfert de couple selon l'une quelconque des revendications 5 à 10, **caractérisé en ce que** la partie de sortie (50) présente, du côté de la boîte de vitesses, une denture axiale (74), dans laquelle vient en prise une denture axiale (75) qui est prévue sur une partie d'accouplement (77) du dispositif d'embrayage (6).

12. Dispositif de transfert de couple selon l'une quelconque des revendications 5 à 10, **caractérisé en ce que** la partie de sortie (90) est connectée par un dispositif de serrage par vissage (92, 93, 131, 132) à une partie d'accouplement (96) du dispositif d'embrayage (6).
